# EUROPEAN PATENT SPECIFICATION

(11) **EP 0 720 533 B1**
(45) Date of publication and mention of the grant of the patent: **24.03.1999**
(21) Application number: 94927006.0
(22) Date of filing: 22.09.1994
(51) Int. Cl.: B32B 27/36, B65D 65/40

(54) **POLYMERIC FILM**
KUNSTSTOFFOLIE
FILM POLYMERE

(30) Priority: 23.09.1993 GB 9319612
(43) Date of publication of application: 10.07.1996
(73) Proprietor: IMPERIAL CHEMICAL INDUSTRIES PLC, London SW1P 3JF (GB)
(72) Inventor: DONNELLAN, John, Paul 2 Hedley Court, Cleveland TS15 9XL (GB); BERRY, Michael, Richard, Cleveland TS14 8PC (GB)
(74) Representative: Jones, Alan John
(86) International application number: GB9402057
(87) International publication number: WO9508442

(56) References cited:
- EP-A- 0 437 942
- EP-A- 0 576 682
- DE-U- 8 615 466
- DATABASE WPI Week 9436, Derwent Publications Ltd., London, GB; AN 94-290526 & JP,A,6 218 895 (TEIJIN LTD) 9 August 1994

## Description

This invention relates to a polymeric film and, in particular, to a polyester film for laminating to metal sheet.

Metal sheet laminated with polymeric film is known, and used, inter alia, for forming cans such as drawn and wall-ironed cans (known as DWI cans) and drawn and redrawn cans (known as DRD cans). Prior to filling the cans, eg with food, the cans are sterilised, normally by steam treatment. The steam treatment can produce a non-homogeneous appearance on the external polymeric film surface of prior art cans which detracts from the aesthetic appeal thereof. The non-homogeneity is generally in the form of rings of diameter of the order of 1 to 10 mm. In addition, the steam treatment can result in whitening or "blushing" of the polymeric film which also detracts from the aesthetic appeal of the resultant can.

We have now devised a polymeric film suitable for laminating to metal sheet which reduces or substantially overcomes at least one of the aforementioned problems.

Accordingly, the present invention provides a polymeric film comprising a substrate layer consisting of a blend of 20 to 60 mole % of a first polyester comprising ethylene terephthalate as the main repeating unit and 40 to 80 mole % of a second polyester comprising butylene terephthalate as the main repeating unit, the substrate layer having on at least one surface thereof a heat-sealable layer comprising a third polyester having a melting point less than that of the first and second polyesters.

The invention also provides a laminated metal sheet comprising, in order, (i) a substrate layer comprising a blend of 20 to 60 mole % of a first polyester comprising ethylene terephthalate as the main repeating unit and 40 to 80 mole % of a second polyester comprising butylene terephthalate as the main repeating unit, (ii) a heat-sealable layer comprising a third polyester having a melting point less than that of the first and second polyesters, and (iii) a metal sheet.

The first polyester of the substrate layer of a polymeric film according to the invention contains ethylene terephthalate as the main repeating unit, preferably in an amount of from 70 to 100 mole %, more preferably 85 to 100 mole %, particularly 95 to 100 mole %, and especially 100 mole %. When the first polyester contains less than 100 mole % of ethylene terephthalate repeating units, the minor repeating units may be formed by condensing one or more dicarboxylic acids or their lower alkyl (up to 6 carbon atoms) diesters, such as terephthalic acid, isophthalic acid, phthalic acid, 2,5-, 2,6- or 2,7-naphthalenedicarboxylic acid, succinic acid, sebacic acid, adipic acid, azelaic acid, 4,4'-diphenyldicarboxylic acid, hexahydro-terephthalic acid or 1,2-bis-p-carboxyphenoxyethane (optionally with a monocarboxylic acid, such as pivalic acid) with one or more glycols, particularly an aliphatic glycol, eg ethylene glycol, 1,3-propanediol, 1,4-butanediol, neopentyl glycol and 1,4-cyclohexanedimethanol. Ethylene isophthalate is a preferred minor repeating unit, more preferably in an amount up to 8 mole %, particularly up to 5 mole %, and especially from 1 to 3 mole %. The melting point of the first polyester is preferably in the range from 240 to 265°C, more preferably 246 to 260°C, and particularly 253 to 258°C.

The second polyester of the substrate layer contains butylene terephthalate as the main repeating unit, preferably in an amount of from 70 to 100 mole %, more preferably 80 to 100 mole %, particularly 95 to 100 mole %, and especially 100 mole %. When the second polyester contains less than 100 mole % of butylene terephthalate repeating units, the minor repeating units may be formed from any of the hereinbefore described dicarboxylic acids and glycols as being suitable for forming the repeating units of the first polyester. Ethylene terephthalate is a preferred minor repeating unit, more preferably in an amount of less than 30 mole %, particularly less than 20 mole %, and especially less than 5 mole %. The melting point of the second polyester is preferably in the range from 200 to 235°C, more preferably 210 to 230°C, and particularly 220 to 225°C.

The substrate layer preferably comprises 40 to 60 mole %, more preferably 40 to 55 mole %, and particularly 45 to 55 mole % of a first polyester comprising ethylene terephthalate as the main repeating unit and 40 to 60 mole %, more preferably 45 to 60 mole %, and particularly 45 to 55 mole % of a second polyester comprising butylene terephthalate as the main repeating unit.

In an alternative embodiment of the invention, the substrate layer comprises a copolyester of ethylene terephthalate and butylene terephthalate in the aforementioned preferred concentration ranges for the first and second polyesters, in addition to, or instead of, the blend of the first and second polyesters.

The substrate layer may be uniaxially oriented, but is preferably biaxially oriented by drawing in two mutually perpendicular directions in the plane of the film to achieve a satisfactory combination of mechanical and physical properties. The substrate layer is preferably stretched at a temperature in the range 70 to 125°C, and preferably heat set, typically at a temperature in the range 150 to 250°C, for example as described in British patent 838,708.

Formation of the substrate layer may be effected by any process known in the art for producing an oriented polyester film, for example a tubular or flat film process.

In a tubular process simultaneous biaxial orientation may be effected by extruding a thermoplastics polyester tube which is subsequently quenched, reheated and then expanded by internal gas pressure to induce transverse orientation, and withdrawn at a rate which will induce longitudinal orientation.

In the preferred flat film process the film-forming polyester is extruded through a slot die and rapidly quenched upon a chilled casting drum to ensure that the polyester blend is quenched to the amorphous state. Orientation is then effected by stretching the quenched extrudate in at least one direction at a temperature above the glass transition temperature of the polyester. Sequential orientation may be effected by stretching a flat, quenched extrudate firstly in one direction, usually the longitudinal direction, ie the forward direction through the film stretching machine, and then in the transverse direction. Forward stretching of the extrudate is conveniently effected over a set of rotating rolls or between two pairs of nip rolls, transverse stretching then being effected in a stenter apparatus. Stretching is effected to an extent determined by the nature of the film-forming polyester, for example from 2.5 to 4.5 times its original dimension in the, or each direction of stretching.

A stretched film may be, and preferably is, dimensionally stabilised by heat-setting under dimensional restraint at a temperature above the glass transition temperature of the film-forming polyester but below the melting temperature thereof, to induce crystallisation of the polyester.

The heat-sealable layer should be capable of forming a heat-seal bond to a metal sheet, by heating to soften the third polyester of the heat-sealable layer and applying pressure without softening or melting the first and second polyesters of the substrate layer.

The third polyester of the heat-sealable layer preferably contains ethylene terephthalate as the main repeating unit. The third polyester suitably comprises a copolyester resin derived from one or more dibasic aromatic carboxylic acids, such as terephthalic acid, isophthalic acid and hexahydroterephthalic acid, and one or more glycols, such as ethylene glycol, 1.3-propane diol, 1,4-butanediol and neopentyl glycol. Typical copolyesters which provide satisfactory heat-sealable properties are those of ethylene terephthalate and ethylene isophthalate, especially in the molar ratios of from 50 to 90 mole % ethylene terephthalate and from 50 to 10 mole % ethylene isophthalate. A preferred third polyester comprises from 65 to 85 mole % ethylene terephthalate and from 35 to 15 mole % ethylene isophthalate, and especially about 82 mole % ethylene terephthalate and about 18 mole % ethylene isophthalate. The melting point of the third polyester is preferably in the range from 150 to 250°C, more preferably 180 to 230°C, particularly 200 to 220°C, and especially 210 to 215°C. In a preferred embodiment of the invention, the melting point of the third polyester is preferably from 20 to 60°C, more preferably 30 to 55°C, particularly 40 to 50°C, and especially 44 to 47°C less than the melting point of the first polyester. In addition, the melting point of the third polyester is preferably from 2 to 20°C, more preferably 5 to 15°C, and particularly 8 to 12°C less than the melting point of the second polyester.

Formation of a polymeric film according to the invention may be effected by conventional techniques, for example by laminating together a preformed substrate layer and a preformed heat-sealable layer, or by casting the heat-sealable layer onto a preformed substrate layer. Conveniently, however, formation of a polymeric film is effected by coextrusion, either by simultaneous coextrusion of the respective film-forming layers through independent orifices of a multi-orifice die, and thereafter uniting the still molten layers, or, preferably, by single-channel coextrusion in which molten streams of the respective polyesters are first united within a channel leading to a die manifold, and thereafter extruded together from the die orifice under conditions of streamline flow without intermixing thereby to produce a polymeric film.

The coextruded polymeric film is stretched to effect molecular orientation of the substrate layer, and preferably heat-set. Generally, the conditions applied for stretching the polymeric film will induce partial crystallisation of the heat-sealable layer and it is therefore preferred to heat set under dimensional restraint at a temperature selected to develop the desired morphology of the heat-sealable layer. Thus, by effecting heat-setting at a temperature below the crystalline melting temperature of the third polyester of the heat-sealable layer and permitting or causing the polymeric film to cool, the third polyester will remain essentially crystalline. However, by heat-setting at a temperature greater than the crystalline melting temperature of the third polyester, the latter will be rendered essentially amorphous. Heat-setting of a polymeric film comprising a copolyester heat-sealable layer is conveniently effected at a temperature within a range of from 175 to 200°C to yield a substantially crystalline heat-sealable layer, or from 200 to 250°C to yield an essentially amorphous heat-sealable layer. An essentially amorphous heat-sealable layer is preferred. The substrate layer preferably has a degree of crystallinity greater than 20%, more preferably greater than 30%, and particularly in the range from 40 to 60%. Film crystallinity can be suitably determined by Laser-Raman spectroscopy.

The substrate layer of the present invention is desirably optically clear, preferably having a % of scattered transmitted visible light (haze) of <6%, more preferably <3.5%, and particularly <1.5%, being measured according to the standard ASTM D 1003.

In an alternative embodiment of the invention, the substrate layer is opaque, preferably exhibiting a Transmission Optical Density (TOD) (Sakura Densitometer; type PDA 65; transmission mode) in the range from 0.2 to 1.5, more preferably from 0.25 to 1.25, especially from 0.35 to 0.75, and particularly from 0.45 to 0.65. The substrate layer is conveniently rendered opaque by incorporation into the polyester blend of an effective amount of an opacifying agent. Suitable opacifying agents include an incompatible resin filler, a particulate inorganic filler or a mixture of two or more such fillers.

By an "incompatible resin" is meant a resin which either does not melt, or which is substantially immiscible with the first and second polyesters, at the highest temperature encountered during extrusion and fabrication of the layer. The presence of an incompatible resin usually results in a voided substrate layer, by which is meant that the substrate layer comprises a cellular structure containing at least a proportion of discrete, closed cells. Suitable incompatible resins include polyamides and olefin polymers, particularly a homo- or co-polymer of a mono-alpha-olefin containing up to 6 carbon atoms in its molecule. Preferred materials include a low or high density olefin homopolymer, particularly polyethylene, polypropylene or poly-4-methylpentene-1, an olefin copolymer, particularly an ethylene-propylene copolymer, or a mixture of two or more thereof. Random, block or graft copolymers may be employed.

The amount of incompatible resin filler present in the substrate layer is preferably within the range from 2% to 30%, more preferably from 3% to 20%, especially from 4% to 15%, and particularly from 5% to 10% by weight, based on the weight of the substrate layer polyesters.

Particulate inorganic fillers suitable for generating an opaque substrate layer include conventional inorganic pigments and fillers, and particularly metal or metalloid oxides, such as alumina, silica and titania, and alkaline metal salts, such as the carbonates and sulphates of calcium and barium. The particulate inorganic fillers may be of the voiding or non-voiding type. Suitable particulate inorganic fillers may be homogeneous and consist essentially of a single filler material or compound, such as titanium dioxide or barium sulphate alone. Alternatively, at least a proportion of the filler may be heterogeneous, the primary filler material being associated with an additional modifying component. For example, the primary filler particle may be treated with a surface modifier, such as a pigment, soap, surfactant coupling agent or other modifier to promote or alter the degree to which the filler is compatible with the substrate layer polyesters.

In a particularly preferred embodiment of the invention, the particulate inorganic filler comprises titanium dioxide.

Production of a substrate layer having satisfactory degrees of opacity and preferably whiteness requires that the inorganic filler, particularly of titanium dioxide, should be finely-divided, and the volume distributed median particle diameter (equivalent spherical diameter corresponding to 50% of the volume of all the particles, read on the cumulative distribution curve relating volume % to the diameter of the particles - often referred to as the "D(v,0.5)" value) thereof is preferably in the range from 0.2 to 5 µm, more preferably from 0.4 to 1.5 µm, and particularly from 0.8 to 1.2 µm.

The size distribution of the particulate inorganic filler, particularly titanium dioxide, particles is also an important parameter, for example the presence of excessively large particles can result in the film exhibiting unsightly 'speckle', ie where the presence of individual filler particles in the film can be discerned with the naked eye. It is preferred that none of the inorganic filler particles incorporated into the substrate layer should have an actual particle size exceeding 30 µm. Particles exceeding such a size may be removed by sieving processes which are known in the art. However, sieving operations are not always totally successful in eliminating all particles greater than a chosen size. In practice, therefore, the size of 99.9% by number of the inorganic filler particles should not exceed 30 µm, preferably should not exceed 20 µm, and more preferably should not exceed 15 µm. Preferably at least 90%, more preferably at least 95% by volume of the inorganic filler particles are within the range of the volume distributed median particle diameter ± 0.8 µm, and particularly ± 0.5 µm.

Particle size of the filler particles may be measured by electron microscope, coulter counter, sedimentation analysis and static or dynamic light scattering. Techniques based on laser light diffraction are preferred. The median particle size may be determined by plotting a cumulative distribution curve representing the percentage of particle volume below chosen particle sizes and measuring the 50th percentile.

The preferred titanium dioxide particles may be of anatase or rutile crystal form. The titanium dioxide particles preferably comprise a major portion of rutile, more preferably at least 60 % by weight, particularly at least 80% by weight, and especially approximately 100 % by weight of rutile. The particles can be prepared by standard procedures, such as using the chloride process or sulphate process.

The amount of inorganic filler, particularly of titanium dioxide, incorporated into the substrate layer desirably should be not less than 1% nor exceed 30% by weight, based on the total weight of the first and second polyesters. Particularly satisfactory levels of opacity are achieved when the concentration of filler is from about 5% to 20%, especially from 10% to 15%, and particularly 12% to 13% by weight, based on the total weight of the first and second polyesters.

If both an incompatible resin filler, preferably a polyolefin, and a particulate inorganic filler, preferably titanium dioxide, are present in the substrate layer it is preferred that the concentration of the particulate inorganic filler is preferably in the range from 1% to 30%, more preferably from 1% to 15%, especially from 2% to 8%, and particularly from 3% to 7% by weight, based on the weight of the substrate layer polyesters.

The components of the substrate layer compositions may be mixed together in conventional manner. For example, by mixing with the monomeric reactants from which the polyester(s) is derived, or the components may be mixed with the polyester(s) by tumble or dry blending or by compounding in an extruder, followed by cooling and, usually, comminution into granules or chips.

Other additives, generally in relatively small quantities, may optionally be incorporated into the substrate and/or heat-sealable layers. For example, optical brighteners in amounts up to 1500 parts per million to promote whiteness, and dyestuffs in amounts of up to 10 parts per million to modify colour, the specified concentrations being by weight, based on the weight of the layer polymer(s).

The thickness of the polymeric film according to the invention is preferably in the range from 5 to 400 µm, more preferably from 8 to 100 µm, and especially from 15 to 30 µm. In general, the thickness of the substrate layer will not exceed 300 µm, and will preferably be in a range from 5 to 80 µm, and more preferably from 5 to 25 µm. The thickness of the heat-sealable layer is preferably in the range from 1 to 100 µm, more preferably from 1 to 50 µm, especially from 2 to 15 µm, and particularly from 2 to 8 µm.

The metal sheet to which the polymeric film according to the invention can be laminated to, is suitably aluminum or steel or alloys thereof. An aluminium sheet is preferably of 0.02 to 0.4 mm thickness, and a steel sheet is preferably of 0.05 to 0.4 mm thickness. The steel may be nickel, zinc or tin plate, black plate, phosphated black plate or electrically chromium coated with both chromium metal and chromium oxide. A suitable method of forming a laminated metal sheet and drawn and wall-ironed (DWI) cans is described in EP-A-0312304, the teaching of which is incorporated herein by reference.

The invention is illustrated by reference to the accompanying drawings in which:
Figure 1 is a schematic sectional elevation, not to scale, of a polymeric film having a substrate layer and a heat-sealable layer.
Figure 2 is a similar schematic elevation of a polymeric film with a metal sheet on the remote surface of the heat-sealable layer.

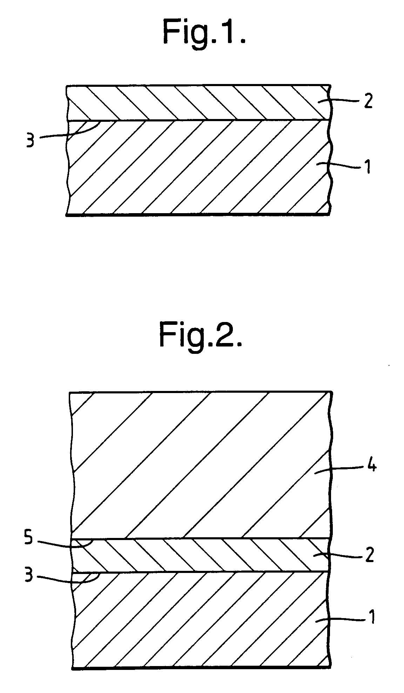

Referring to Figure 1 of the drawings, the polymeric film comprises a substrate layer (1), having a heat-sealable layer (2) bonded to one surface (3) of the substrate layer (1).

The film of Figure 2 further comprises a metal sheet (4) bonded to the remote surface (5) of the heat-sealable layer (2).

The invention is further illustrated by reference to the following examples.

### Example 1

This is a comparative example not according to the invention.

Separate streams of a substrate layer composition of 77 mole % of polyethylene terephthalate and 23 mole % of polybutylene terephthalate, and a heat-sealable layer polymer of a copolyester of 82 mole % ethylene terephthalate and 18 mole % ethylene isophthalate were supplied from separate extruders to a single channel coextrusion assembly. The polymer layers were extruded through a film-forming die onto a water cooled rotating, quenching drum to yield an amorphous cast composite film of 200 µm thickness. The film was placed above a boiling water bath for 30 minutes, with the substrate layer in contact with steam from the water bath. The external surface of the substrate layer was examined by eye and found to exhibit white rings of diameter 1 to 5 mm. A significant whitening, ie "blushing" of the polymeric materials of the film was also observed. Both the aforementioned ring formation and "blushing" detracted from the aesthetic appeal of the film.

### Example 2

The procedure of Example 1 was repeated except that the substrate layer contained 53 mole % of polyethylene terephthalate and 47 mole % of polybutylene terephthalate. The external surface of the substrate layer was examined after subjecting the film to steam treatment, and found to exhibit a homogeneous surface, ie no rings were present. In addition, only a small amount of whitening of the polymeric materials of the film was observed.

### Example 3

The procedure of Example 1 was repeated except that the substrate layer contained 30 mole % of polyethylene terephthalate and 70 mole % of polybutylene terephthalate. The external surface of the substrate layer was examined after subjecting the film to steam treatment, and found to exhibit a homogeneous surface, ie no rings were present. In addition, no whitening of the polymeric materials of the film was observed.

The above examples illustrate the improved properties of a polymeric film according to the present invention.

## Claims

1. A polymeric film comprising a substrate layer consisting of a blend of 20 to 60 mole % of a first polyester comprising ethylene terephthalate as the main repeating unit and 40 to 80 mole % of a second polyester comprising butylene terephthalate as the main repeating unit, the substrate layer having on at least one surface thereof a heat-sealable layer comprising a third polyester having a melting point less than that of the first and second polyesters.

2. A polymeric film according to claim 1 wherein the substrate layer is opaque.

3. A polymeric film according to either one of claims 1 and 2 wherein the first polyester of the substrate layer comprises 95 to 100 mole % of ethylene terephthalate.

4. A polymeric film according to any one of the preceding claims wherein the second polyester of the substrate layer is polybutylene terephthalate.

5. A polymeric film according to any one of the preceding claims wherein the third polyester of the heat-sealable layer is an ethylene terephthalate/ethylene isophthalate copolyester.

6. A polymeric film according to any one of the preceding claims wherein the melting point of the third polyester is 5 to 15°C less than the melting point of the second polyester.

7. A polymeric film according to any one of the preceding claims wherein the melting point of the third polyester is 30 to 55°C less than the melting point of the first polyester.

8. A polymeric film according to any one of the preceding claims wherein the substrate layer contains 40 to 55 mole % of the first polyester and 45 to 60 mole % of the second polyester.

9. A laminated metal sheet comprising, in order, (i) a substrate layer comprising a blend of 20 to 60 mole % of a first polyester comprising ethylene terephthalate as the main repeating unit and 40 to 80 mole % of a second polyester comprising butylene terephthalate as the main repeating unit, (ii) a heat-sealable layer comprising a third polyester having a melting point less than that of the first and second polyesters, and (iii) a metal sheet.

## Patentansprüche

1. Kunststoffolie, die eine Substratschicht aufweist, die sich ihrerseits zusammensetzt aus einer Mischung von 20 bis 60 Mol% eines ersten Ethylenterephthalat als der hauptsächlichen Wiederholungseinheit aufweisenden Polyesters und von 40 bis 80 Mol% eines zweiten Butylenterephthalat als der hauptsächlichen Wiederholungseinheit aufweisenden Polyesters, wobei die Substratschicht auf wenigstens einer Oberfläche derselben eine thermisch schweißbare Schicht besitzt, welche einen dritten Polyester umfaßt welcher einen Schmelzpunkt hat der unter denjenigen des ersten und des zweiten Polyesters liegt.

2. Kunststoffolie gemäß Anspruch 1, bei welcher die Substratschicht lichtundurchlässig ist.

3. Kunststoffolie gemäß einem jeden der beiden Ansprüche 1 und 2, bei welcher der erste Polyester der Substratschicht 95 bis 100 Mol% Ethylenterephthalat aufweist.

4. Kunststoffolie gemäß irgendeinem der vorhergehenden Ansprüche, bei welcher der zweite Polyester der Substratschicht aus Polybutylenterephthalat besteht.

5. Kunststoffolie gemäß irgendeinem der vorhergehenden Ansprüche, bei welcher der dritte Polyester der thermisch schweißbaren Schicht aus einem Copolyester von Ethylenterephthalat und Ethylenisophthalat besteht.

6. Kunststoffolie gemäß irgendeinem der vorhergehenden Ansprüche, bei welcher der Schmelzpunkt des dritten Polyesters um 5 bis 15°C unter dem Schmelzpunkt des zweiten Polyesters liegt.

7. Kunststoffolie gemäß irgendeinem der vorhergehenden Ansprüche, bei welcher der Schmelzpunkt des dritten Polyesters um 30 bis 55°C unter dem Schmelzpunkt des ersten Polyesters liegt.

8. Kunststoffolie gemäß irgendeinem der vorhergehenden Ansprüche bei welcher die Substratschicht 40 bis 55 Mol% des ersten Polyesters und 45 bis 60 Mol% des zweiten Polyesters enthält.

9. Gewalztes metallisches Blech, das sich der Reihe nach zusammensetzt aus: (i) einer Substratschicht, die sich ihrerseits zusammensetzt aus einer Mischung von 20 bis 60 Mol% eines ersten Ethylenterephthalat als der hauptsächlichen Wiederholungseinheit aufweisenden Polyesters und von 40 bis 80 Mol% eines zweiten Butylenterephthalat als der hauptsächlichen Wiederholungseinheit aufweisenden Polyesters, (ii) einer thermisch schweißbaren Schicht besitzt, welche einen dritten Polyester umfaßt welcher einen Schmelzpunkt hat der unter demjenigen des ersten und des zweiten Polyesters liegt, und (iii) einem metallischen Blech.

## Revendications

1. Film polymère comprenant une couche de substrat composée d'un mélange de 20 à 60% en moles d'un premier polyester comprenant du téréphtalate d'éthylène en tant qu'unité de répétition principale et de 40 à 80% en moles d'un deuxième polyester comprenant du téréphtalate de butylène en tant qu'unité de répétition principale, la couche de substrat présentant sur au moins une surface de celle-ci une couche thermosoudable comprenant un troisième polyester avec un point de fusion inférieur à celui du premier et du deuxième polyesters.

2. Film polymère suivant la revendication 1, dans lequel la couche de substrat est opaque.

3. Film polymère suivant l'une ou l'autre des revendications 1 et 2, dans lequel le premier polyester de la couche de substrat comprend 95 à 100% en moles de téréphtalate d'éthylène.

4. Film polymère suivant l'une quelconque des revendications précédentes, dans lequel le deuxième polyester de la couche de substrat est du téréphtalate de polybutylène.

5. Film polymère suivant l'une quelconque des revendications précédentes, dans lequel le troisième polyester de la couche thermosoudable est un copolyester de téréphtalate d'éthylène et d'isophtalate d'éthylène.

6. Film polymère suivant l'une quelconque des revendications précédentes, dans lequel le point de fusion du troisième polyester est de 5 à 15°C inférieur au point de fusion du deuxième polyester.

7. Film polymère suivant l'une quelconque des revendications précédentes, dans lequel le point de fusion du troisième polyester est de 30 à 55°C inférieur au point de fusion du premier polyester.

8. Film polymère suivant l'une quelconque des revendications précédentes, dans lequel la couche de substrat contient 40 à 55% en moles du premier polyester et 45 à 60% en moles du deuxième polyester.

9. Tôle métallique laminée comprenant, dans l'ordre, (i) une couche de substrat comprenant un mélange de 20 à 60% en mot es d'un premier polyester comprenant du téréphtalate d'éthylène en tant qu'unité de répétition principale et de 40 à 80% en moles d'un deuxième polyester comprenant du téréphtalate de butylène en tant qu'unité de répétition principale (ii) une couche thermosoudable comprenant un troisième polyester avec un point de fusion inférieur à celui du premier et du deuxième polyesters, et (iii) une tôle métallique.
